# EUROPEAN PATENT APPLICATION

(11) **EP 4 152 576 A1**
(43) Date of publication of application: **22.03.2023**
(21) Application number: 21843279.7
(22) Date of filing: 22.03.2021
(51) Int. Cl.: H02K 15/02, H02K 1/28

(54) **ROTOR MANUFACTURING METHOD AND ROTOR**

(30) Priority: 16.07.2020 JP 2020121866
(71) Applicant: AISIN CORPORATION, Kariya-shi, Aichi 448-8650 (JP)
(72) Inventor: MURAKAMI, Satoshi, Kariya, Aichi 448-8650 (JP); HARA, Yutaka, Kariya, Aichi 448-8650 (JP); SAITO, Mariko, Kariya, Aichi 448-8650 (JP)
(74) Representative: Kramer Barske Schmidtchen Patentanwälte PartG mbB
(86) International application number: PCT/JP2021/011728
(87) International publication number: WO 2022/014100

(57) **Abstract**

A method for manufacturing a rotor includes: an inserting step of inserting a shaft into a shaft insertion hole in such a manner that a distance between a vertex of the shaft insertion hole having a non-circular shape and an outer peripheral surface of the shaft is equal to a first distance and a distance between the outer peripheral surface of the shaft and a side of the shaft insertion hole is equal to a second distance that is smaller than the first distance; and a fixing step of fixing the shaft to the laminated core by hydroforming.

## Description

### TECHNICAL FIELD

The present invention relates to methods for manufacturing a rotor and rotors.

### BACKGROUND ART

Conventionally, a method for manufacturing a rotor into which a shaft is inserted and a rotor is known in the art. Such a method for manufacturing a rotor and a rotor is disclosed in, for example, Japanese Unexamined Patent Application Publication No. 2001-268858 (JP 2001-268858 A).

JP 2001-268858 A discloses a motor rotor including a hollow rotating shaft having a pipe structure and a laminated iron core with the rotating shaft inserted therein. The rotating shaft is inserted into a through hole in the center of the laminated core. The rotating shaft has retaining portions formed by a hydroforming process. The retaining portions are formed by expanding the rotating shaft outward in the radial direction by the hydroforming process. The retaining portions are formed so as to sandwich the laminated core therebetween in the axial direction.

The laminated iron core is formed by stacking silicon steel plates with one keyway. A protrusion that meshes with the keyway is formed as a result of expansion of the rotating shaft by the hydroforming process. Meshing between the protrusion and the keyway reduces displacement of the laminated iron core with respect to the rotating shaft in the rotational direction.

### Related Art Documents

Patent Documents

Patent Document 1: Japanese Unexamined Patent Application Publication No. 2001-268858 (JP 2001-268858 A)

### SUMMARY OF THE INVENTION

### Problem to be Solved by the Invention

In the rotor disclosed in JP 2001-268858 A, however, displacement of the laminated iron core with respect to the rotating shaft in the rotational direction is reduced by only one position where the keyway is located in the rotational direction (circumferential direction) of the laminated iron core. Forming a keyway at one position is disadvantageous as it makes the shape of the shaft unbalanced as viewed in the axial direction. This results in unbalanced rotation of the rotor.

The present invention was made to solve the above problem, and it is one object of the present invention to provide a rotor and a method for manufacturing a rotor that can prevent unbalanced rotation of the rotor while preventing displacement of a laminated core with respect to a shaft in the rotational direction in the case where the shaft is fixed to the laminated core by hydroforming.

### Means for Solving the Problem

In order to achieve the above object, a method for manufacturing a rotor according to a first aspect of the present invention is a method for manufacturing a rotor including a laminated core, the laminated core including a shaft insertion hole into which a cylindrical shaft is inserted and a magnet insertion hole into which a permanent magnet is inserted. The method includes: an inserting step of inserting the shaft into the shaft insertion hole in such a manner that a distance between a vertex of the shaft insertion hole that is located in a central portion of the laminated core and has a non-circular shape including a plurality of the vertices, as viewed in an axial direction of the laminated core, and an outer peripheral surface of the shaft is equal to a first distance and a distance between the outer peripheral surface of the shaft and a side of the shaft insertion hole is equal to a second distance that is smaller than the first distance; and a fixing step of fixing the shaft to the laminated core by performing, with the shaft inserted in the shaft insertion hole of the laminated core, hydroforming in which a liquid filling an inside of the shaft is expanded by being pressurized, and thus deforming the outer peripheral surface of the shaft into a non-circular shape in such a manner that the outer peripheral surface of the shaft conforms to an inner peripheral surface of the shaft insertion hole as viewed in the axial direction.

In the method for manufacturing a rotor according to the first aspect of the present invention, as described above, the following steps are performed: the inserting step of inserting the shaft into the shaft insertion hole in such a manner that the distance between a vertex of the shaft insertion hole having a non-circular shape including a plurality of the vertices as viewed in an axial direction of the laminated core and the outer peripheral surface of the shaft is equal to the first distance and the distance between the outer peripheral surface of the shaft and a side of the shaft insertion hole is equal to the second distance that is smaller than the first distance; and the fixing step of fixing the shaft to the laminated core by performing hydroforming to deform the outer peripheral surface of the shaft into a non-circular shape in such a manner that the outer peripheral surface of the shaft conforms to the inner peripheral surface of the shaft insertion hole as viewed in the axial direction. Displacement of the laminated core with respect to the shaft in a rotational direction is thus restricted at each of the plurality of vertices. As a result, displacement of the laminated core with respect to the shaft in the rotational direction can be prevented in a more balanced manner as compared to the case where the shaft insertion hole has only one vertex. A method for manufacturing a rotor that can prevent unbalanced rotation of a rotor while preventing displacement of a laminated core with respect to a shaft in the rotational direction can thus be provided.

A rotor according to a second aspect of the present invention includes: a cylindrical shaft; a permanent magnet; and a laminated core including a shaft insertion hole into which the shaft is inserted and a magnet insertion hole into which the permanent magnet is inserted. The shaft is fixed to the laminated core by hydroforming in which a liquid filling an inside of the shaft is expanded by being pressurized. The shaft insertion hole is located in a central portion of the laminated core and has a non-circular shape including a plurality of vertices, as viewed in an axial direction of the laminated core. The laminated core is configured in such a manner that the number of vertices and sides of the shaft insertion hole is an integral multiple of the number of poles or is the number of poles divided by a divisor of the number of poles other than the number of poles.

In the rotor according to the second aspect of the present invention, as described above, the shaft insertion hole has a non-circular shape including a plurality of vertices, as viewed in the axial direction of the laminated core. Displacement of the laminated core with respect to the shaft in a rotational direction is thus restricted at each of the plurality of vertices. Moreover, the laminated core is configured in such a manner that the number of vertices and sides of the shaft insertion hole is an integral multiple of the number of poles or is the number of poles divided by a divisor of the number of poles other than the number of poles. Accordingly, when the number of vertices and sides of the shaft insertion hole is an integral multiple of the number of poles, the rotor can be easily formed in such a manner that the vertices (sides) are evenly arranged for each of the plurality of poles. When the number of vertices and sides is the number of poles divided by a divisor of the number of poles other than the number of poles, the rotor can be easily formed in such manner that the vertices (sides) are evenly arranged for each of pole groups per the divisor. As a result, displacement of the laminated core with respect to the shaft in the rotational direction can be prevented in a more balanced manner for each of the plurality of poles or for each of the pole groups per the divisor. Unbalanced rotation of the rotor can thus be prevented while preventing displacement of the laminated core with respect to the shaft in the rotational direction.

### Effects of the Invention

According to the present invention, unbalanced rotation of the rotor can be prevented while preventing displacement of the laminated core with respect to the shaft in the rotational direction.

### BRIEF DESCRIPTION OF THE DRAWINGS

[FIG. 1] FIG. 1 is a sectional plan view showing a configuration of a rotor (rotating electrical machine) according to a first embodiment.
[FIG. 2] FIG. 2 is a partial enlarged view near a magnetic pole forming portion in FIG. 1.
[FIG. 3] FIG. 3 is a sectional perspective view of a laminated core and a shaft as taken along the axial direction according to the first embodiment.
[FIG. 4] FIG. 4 is a flowchart showing a method for manufacturing a rotor according to the first embodiment.
[FIG. 5] FIG. 5 is a perspective view showing the configuration of the shaft and the laminated core before the shaft is inserted into the laminated core according to the first embodiment.
[FIG. 6] FIG. 6 is a sectional view of the shaft inserted through the laminated core as taken along the axial direction according to the first embodiment.
[FIG. 7] FIG. 7 is a sectional plan view of the shaft inserted through the laminated core according to the first embodiment, showing the state before hydroforming.
[FIG. 8] FIG. 8 is a sectional view during hydroforming as taken along the axial direction according to the first embodiment.
[FIG. 9] FIG. 9 is a sectional plan view showing the configuration of a rotor (rotating electrical machine) according to a second embodiment.
[FIG. 10] FIG. 10 is a partial enlarged view near a magnetic pole forming portion in FIG. 9.
[FIG. 11] FIG. 11 is a flowchart showing a method for manufacturing a rotor according to the second embodiment.
[FIG. 12] FIG. 12 shows sectional plan views showing the configurations of a laminated core according to modifications of the first embodiment.
[FIG. 13] FIG. 13 shows sectional plan views showing the configurations of a laminated core according to modifications of the second embodiment.

### MODES FOR CARRYING OUT THE INVENTION

Hereinafter, embodiments of the present invention will be described with reference to the drawings.

### [First Embodiment]

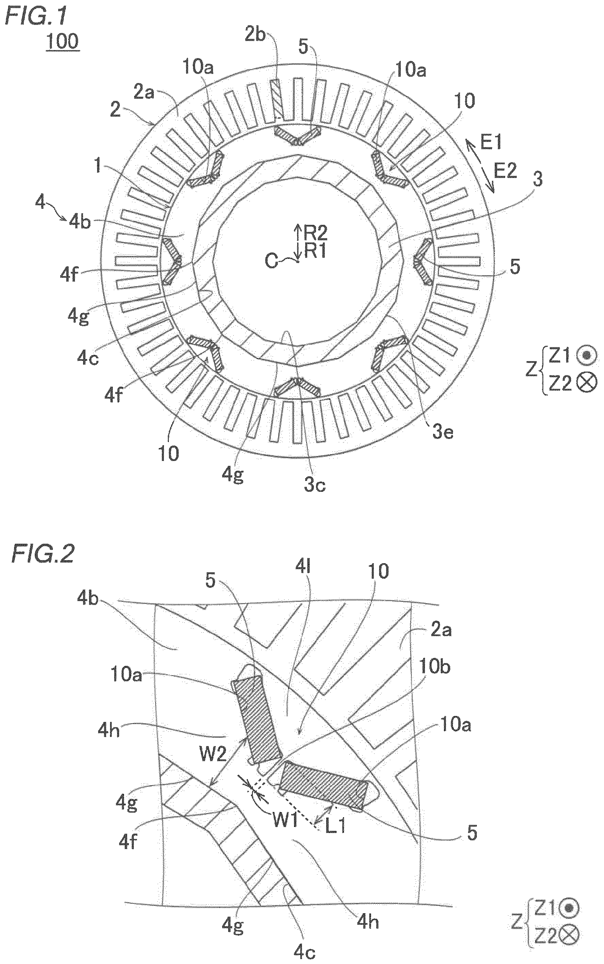

A rotor 1 and a method for manufacturing the rotor 1 according to a first embodiment will be described with reference to FIGS. 1 to 8.

In the present specification, the "axial direction" means a direction along a rotation axis C of the rotor 1 and means the Z direction in the drawings. The "radial direction" means the radial direction of the rotor 1 (R1 direction or R2 direction), and the "circumferential direction" means the circumferential direction of the rotor 1 (E1 direction or E2 direction).

### (Structure of Rotor)

First, the structure of the rotor 1 of the first embodiment will be described with reference to FIG. 1.

As shown in FIG. 1, a rotating electrical machine 100 includes the rotor 1 and a stator 2. The rotor 1 and the stator 2 are each formed in an annular shape. The rotor 1 is disposed so as to face the radially inner side of the stator 2. That is, in the first embodiment, the rotating electrical machine 100 is configured as an inner rotor type rotating electrical machine. A shaft 3 is disposed radially inside the rotor 1 (rotor core 4). The shaft 3 is connected to an engine, an axle, etc. via a rotational force transmission member such as a gear. For example, the rotating electrical machine 100 is configured as a motor, a generator, or a motor generator, and is configured to be mounted on a vehicle.

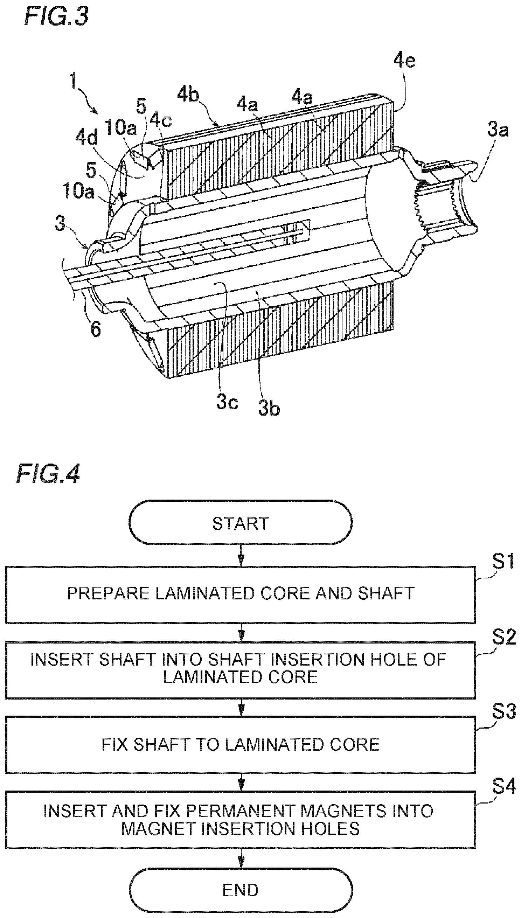

The rotor 1 includes the rotor core 4. The rotor core 4 includes a laminated core 4b formed by stacking a plurality of electrical steel sheets 4a (see FIG. 3) and having a magnet insertion hole 10a extending in the stacking direction of the electrical steel sheets 4a. The rotor 1 (rotor core 4) further includes a permanent magnet 5. The permanent magnet 5 is inserted (placed) in the magnet insertion hole 10a of the laminated core 4b.

The laminated core 4b has a plurality of (16 in the first embodiment) magnet insertion holes 10a. That is, the rotating electrical machine 100 is configured as an interior permanent magnet motor (IPM motor).

The laminated core 4b includes a plurality of magnetic pole forming portions 10 each including a pair of magnet insertion holes 10a adjacent to each other in the circumferential direction and a bridge portion 10b (see FIG. 2) located between the pair of magnet insertion holes 10a. The bridge portion 10b is formed so as to connect a radially inner portion 4h of the laminated core 4b and a radially outer portion 4l of the laminated core 4b. Eight magnetic pole forming portions 10 are located at regular angular intervals in the circumferential direction in the laminated core 4b as viewed in the direction of the rotation axis C. The pair of magnet insertion holes 10a in the magnetic pole forming portion 10 is arranged in a V shape.

As shown in FIG. 2, the bridge portion 10b is formed so as to connect a portion of the laminated core 4b that is located radially outward of the magnet insertion holes 10a and a portion of the laminated core 4b that is located radially inward of the magnet insertion holes 10a. The bridge portion 10b is formed so as to extend in the radial direction. A circumferential width W1 of the bridge portion 10b is smaller than a radial length L1 of the bridge portion 10b.

As shown in FIG. 1, the rotor core 4 is rotated about the rotation axis C. The rotor core 4 (laminated core 4b) includes a shaft insertion hole 4c formed in the central portion of the laminated core 4b as viewed in the axial direction of the laminated core 4b (as viewed in a Z1 direction). The shaft 3 is inserted into the shaft insertion hole 4c of the laminated core 4b. When the shaft 3 is rotated, the rotational force of the shaft 3 is transmitted to the laminated core 4b, so that the laminated core 4b is rotated.

The stator 2 includes a stator core 2a and a coil 2b wound around (placed in) the stator core 2a. The stator core 2a is located radially outward of the rotor core 4. The stator core 2a is composed of, for example, a plurality of electrical steel sheets (silicon steel sheets) stacked on top of each other in the axial direction, and is configured to allow magnetic flux to pass therethrough. The coil 2b is connected to an external power supply unit, and is configured to be supplied with electric power (e.g. three-phase alternating current electric power). The coil 2b is configured to generate a magnetic field when supplied with electric power. The rotor 1 and the shaft 3 are configured to rotate with respect to the stator 2 as an engine etc. is driven even when no electric power is supplied to the coil 2b. Although only a part of the coil 2b is illustrated in FIG. 1, the coil 2b is located along the entire circumference of the stator core 2a.

The permanent magnet 5 is rectangular in cross section orthogonal to the axial direction. For example, the permanent magnet 5 is configured such that its magnetization direction (magnetized direction) is the lateral direction of the permanent magnet 5. A resin material, not shown, for fixing the permanent magnet 5 placed in the magnet insertion hole 10a is placed in the magnet insertion hole 10a.

As shown in FIG. 3, the shaft 3 is formed in a cylindrical shape. The shaft 3 has an insertion hole 3a into which an oil injection portion 6, which will be described later, is inserted.

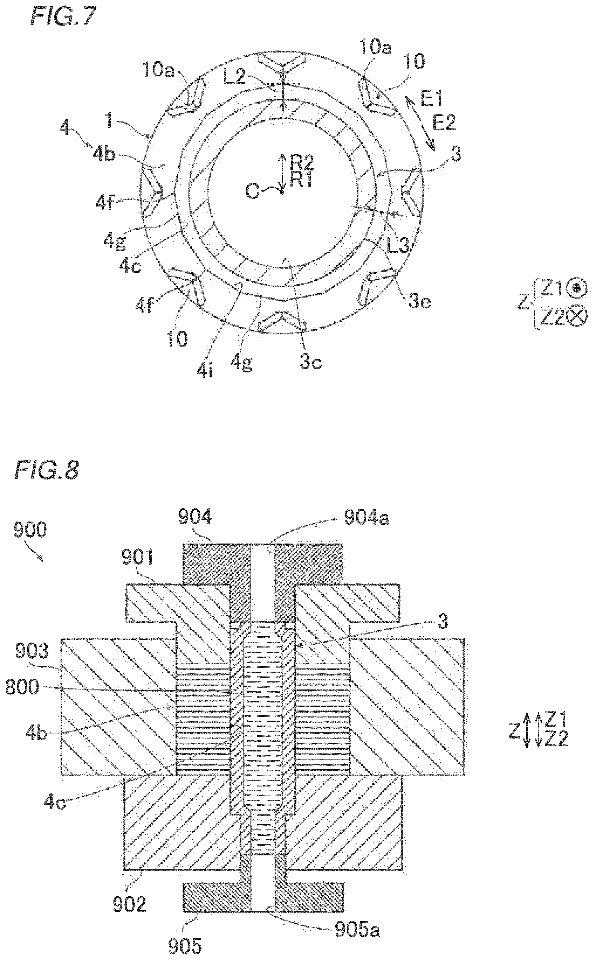

The shaft 3 is fixed to the laminated core 4b by hydroforming in which a liquid 800 filling the shaft 3 (see FIG. 8) is expanded by being pressurized. Specifically, the shaft 3 includes a fixed portion 3b fixed to the laminated core 4b. The fixed portion 3b is the entire portion of the shaft 3 that is inserted into the shaft insertion hole 4c of the laminated core 4b.

The rotor 1 further includes the oil injection portion 6 that is inserted into the shaft 3 through the insertion hole 3a and that injects cooling oil inside the shaft 3.

In the first embodiment, as shown in FIG. 1, the shaft insertion hole 4c has a non-circular shape including a plurality of vertices 4f, as viewed in the axial direction. Specifically, the shaft insertion hole 4c has a regular polygonal shape as viewed in the axial direction. More specifically, the shaft insertion hole 4c has a regular hexadecagonal shape as viewed in the axial direction. The shaft insertion hole 4c may have a regular polygonal shape other than the regular hexadecagonal shape (e.g., a regular hexagonal shape) as viewed in the axial direction.

An outer peripheral surface 3e (inner peripheral surface 3c) of the shaft 3 expanded by hydroforming therefore has a regular hexadecagonal shape so as to conform to the shaft insertion hole 4c of the rotor core 4, as viewed in the axial direction.

In the first embodiment, the laminated core 4b is configured so that the number of vertices 4f and sides 4g of the shaft insertion hole 4c is an integral multiple of the number of poles. Specifically, the number of poles (number of magnetic pole forming portions 10) is 8, and the number of vertices 4f and sides 4g of the shaft insertion hole 4c is 16. That is, the number of vertices 4f and sides 4g of the shaft insertion hole 4c is twice the number of poles.

The vertices 4f of the shaft insertion hole 4c are portions located at the intersections of adjacent ones of the sides 4g. The vertices 4f of the shaft insertion hole 4c need not necessarily be sharp corners, and may have a constant curvature. The sides 4g need not necessarily be straight lines, and may have a constant curvature.

In the first embodiment, the laminated core 4b is configured so that the vertices 4f of the shaft insertion hole 4c are located at such positions that the vertices 4f overlap the bridge portions 10b (all of the eight bridge portions 10b) of the magnetic pole forming portions 10 in the circumferential direction as viewed in the axial direction. Those vertices 4f that do not overlap the bridge portions 10b in the circumferential direction are located at such positions that these vertices 4f overlap, in the circumferential direction, the middle parts in the circumferential direction of the portions each located between circumferentially adjacent ones of the magnetic pole forming portions 10. Those vertices 4f that are located at such positions that they overlap the bridge portions 10b in the circumferential direction are formed so that these vertices 4f overlap near the middles in the circumferential direction of the bridge portions 10b in the circumferential direction.

The laminated core 4b is configured in such a manner that the magnet insertion holes 10a are located at such positions that the magnet insertion holes 10a overlap the sides 4g of the shaft insertion hole 4c in the circumferential direction as viewed in the axial direction. The radially inner portion 4h with a width W2 in the radial direction is formed between the magnet insertion holes 10a and the sides 4g. Since the pair of magnet insertion holes 10a has a V shape, the width W2 gradually decreases as it gets closer to the vertex 4f located at such a position that the vertex 4f overlaps the bridge portion 10b in the circumferential direction.

### (Method for Manufacturing Rotor)

Next, a method for manufacturing the rotor 1 will be described with reference to FIGS. 4 to 8.

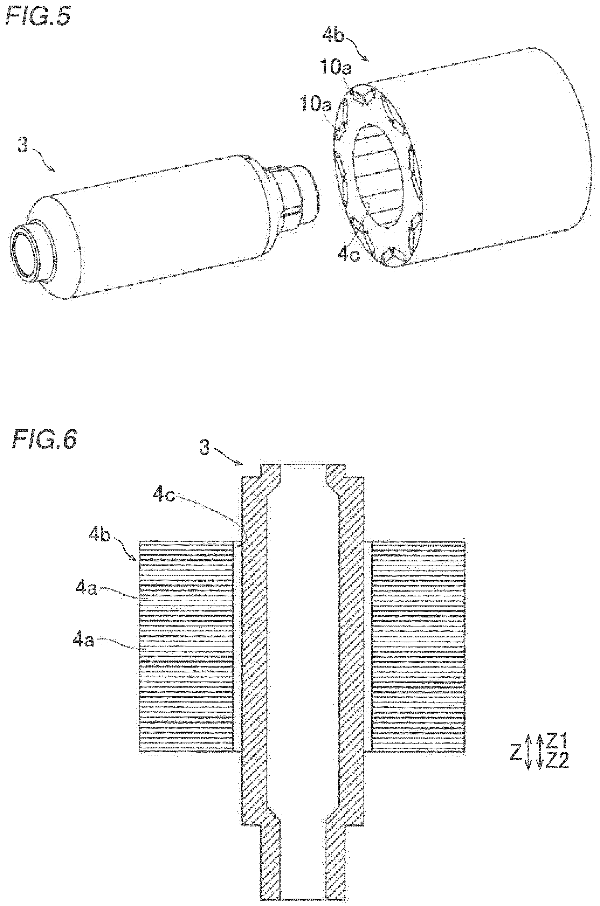

First, as shown in FIG. 4, the step of preparing the laminated core 4b and the shaft 3 is performed in step S1. Specifically, as shown in FIG. 5, the cylindrical shaft 3 and the laminated core 4b with the shaft insertion hole 4c having a non-circular shape (regular hexadecagonal shape) as viewed in the axial direction are prepared. At this point, the shaft 3 has a circular shape (see FIG. 7) as viewed in the axial direction.

The core forming step of forming the laminated core 4b in such a manner that the vertices 4f of the shaft insertion hole 4c are located at such positions that the vertices 4f overlap the bridge portions 10b, each located between circumferentially adjacent ones of the magnet insertion holes 10a, in the circumferential direction as viewed in the axial direction is performed in step S1. Specifically, the core forming step is the step of forming the laminated core 4b in such a manner that the vertices 4f of the shaft insertion hole 4c are located at such positions that the vertices 4f overlap the bridge portions 10b, each located between the pair of magnet insertion holes 10a adjacent to each other in the circumferential direction in each of the plurality of magnetic pole forming portions 10 and each connecting the radially outer portion 4l of the laminated core 4b and the radially inner portion 4h of the laminated core 4b, in the circumferential direction as viewed in the axial direction. The core forming step performed in step S1 is an example of the "first core forming step" in the claims.

Next, as shown in FIG. 4, the inserting step of inserting the shaft 3 into the shaft insertion hole 4c (see FIG. 6) is performed in step S2. Specifically, as shown in FIG. 7, the inserting step is the step of inserting the shaft 3 having a circular shape as viewed in the axial direction into the shaft insertion hole 4c having a regular polygonal (regular hexadecagonal) shape as viewed in the axial direction.

Specifically, in the first embodiment, the inserting step is the step of inserting the shaft 3 into the shaft insertion hole 4c of the laminated core 4b in which the vertices 4f of the shaft insertion hole 4c are located at such positions that the vertices 4f overlap the bridge portions 10b (see FIG. 2), each located between circumferentially adjacent ones of the magnet insertion holes 10a, in the circumferential direction as viewed in the axial direction. After this inserting step (before the fixing step that will be describe later), the outer peripheral surface 3e of the shaft 3 and an inner peripheral surface 4i of the shaft insertion hole 4c are separate from each other.

Specifically, the inserting step is the step of inserting the shaft 3 into the shaft insertion hole 4c such that the distance between the outer peripheral surface 3e of the shaft 3 and the vertex 4f of the shaft insertion hole 4c is equal to a distance L2 and the distance between the outer peripheral surface 3e of the shaft 3 and the side 4g of the shaft insertion hole 4c is equal to a distance L3 that is smaller than the distance L2 as viewed in the axial direction. More specifically, the shaft 3 is inserted (placed) into the shaft insertion hole 4c such that the distances between the outer peripheral surface 3e of the shaft 3 and all the vertices 4f of the shaft insertion hole 4c are the same and are equal to the distance L2 and the distances between the outer peripheral surface 3e of the shaft 3 and all the sides 4g of the shaft insertion hole 4c are the same and are equal to the distance L3. The distance L2 is the shortest distance between the outer peripheral surface 3e of the shaft 3 and the vertex 4f of the shaft insertion hole 4c. The distance L3 is the shortest distance between the outer peripheral surface 3e of the shaft 3 and the side 4g of the shaft insertion hole 4c. The distance L2 and the distance L3 are examples of the "first distance" and the "second distance" in the claims, respectively.

Then, as shown in FIG. 4, the fixing step of fixing the shaft 3 to the laminated core 4b is performed in step S3. Specifically, the fixing step is the step of fixing the shaft 3 to the laminated core 4b by performing, with the shaft 3 inserted in the shaft insertion hole 4c of the laminated core 4b, hydroforming to deform the outer peripheral surface 3e of the shaft 3 into a non-circular shape (regular hexadecagonal shape) in such a manner that the outer peripheral surface 3e of the shaft 3 conforms to the inner peripheral surface 4i of the shaft insertion hole 4c as viewed in the axial direction (see FIG. 1). At this time, since the distance L3 between the outer peripheral surface 3e of the shaft 3 and the side 4g of the shaft insertion hole 4c is smaller than the distance L2 between the outer peripheral surface 3e of the shaft 3 and the vertex 4f of the shaft insertion hole 4c, the shaft 3 expands in such a manner that the outer peripheral surface 3e of the shaft 3 first comes into contact with the sides 4g of the shaft insertion hole 4c and then the outer peripheral surface 3e of the shaft 3 comes into contact with the vertices 4f of the shaft insertion hole 4c.

As shown in FIG. 8, when performing the hydroforming, the laminated core 4b and the shaft 3 are placed (set) in a hydroforming machine 900. The hydroforming machine 900 includes an upper die 901 that presses the laminated core 4b from the Z1 side, and a lower die 902 that presses the laminated core 4b from the Z2 side. The hydroforming machine 900 further includes a restricting portion 903 that restricts radial movement of the laminated core 4b from outside in the radial direction.

The hydroforming machine 900 further includes an upper sealing portion 904 that seals the Z1-side end of the shaft 3 and a lower sealing portion 905 that seals the Z2-side end of the shaft 3. The upper sealing portion 904 and the lower sealing portion 905 are provided with introducing paths 904a, 905a for introducing the liquid 800 into the shaft 3, respectively.

Subsequently, as shown in FIG. 4, the step of inserting the permanent magnets 5 (see FIG. 1) into the magnet insertion holes 10a and fixing the permanent magnets 5 by filling the magnet insertion holes 10a with a resin material, not shown, is performed in step S4. That is, the hydroforming is performed with the permanent magnets 5 not inserted (placed) in the magnet insertion holes 10a.

### [Second Embodiment]

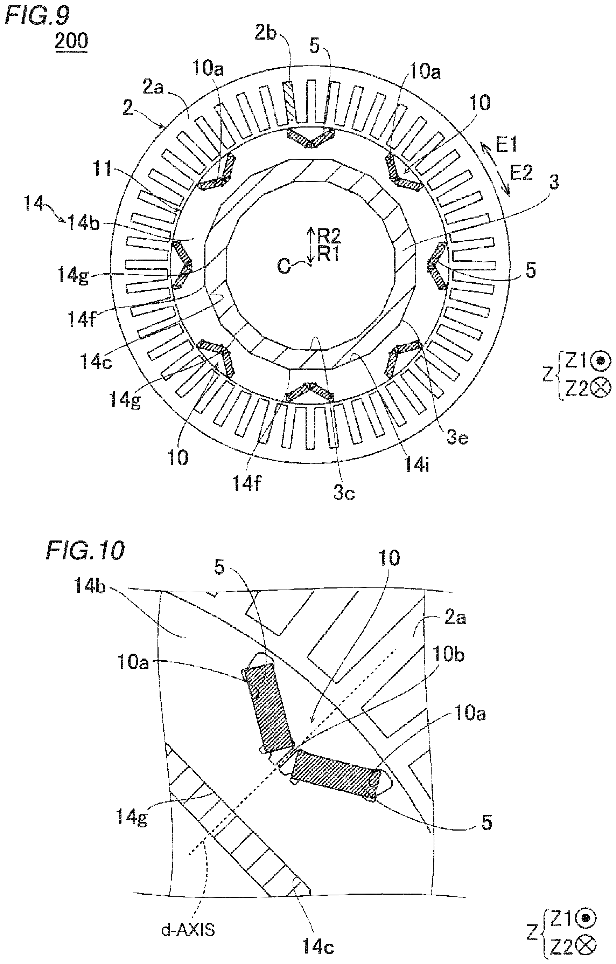

Next, a rotor 11 and a method for manufacturing the rotor 11 according to a second embodiment will be described with reference to FIGS. 9 to 11. In the rotor 11 of the second embodiment, unlike the first embodiment in which the vertices 4f of the shaft insertion hole 4c and the bridge portions 10b are located so as to overlap each other in the circumferential direction, sides 14g of a shaft insertion hole 14c are located at such positions that the sides 14g overlap d-axes in the circumferential direction. Configurations similar to those of the first embodiment are denoted by the same signs as those of the first embodiment in the drawings, and description thereof will be omitted.

### (Structure of Rotor)

First, the structure of the rotor 11 according to the second embodiment will be described with reference to FIG. 9.

As shown in FIG. 9, a rotating electrical machine 200 includes the rotor 11 instead of the rotor 1 of the rotating electrical machine 100 of the first embodiment.

The rotor 11 includes a rotor core 14. The rotor core 14 includes a laminated core 14b having magnet insertion holes 10a. The rotor core 14 (laminated core 14b) includes the shaft insertion hole 14c formed in the central portion of the laminated core 14b as viewed in the axial direction of the laminated core 14b (as viewed in the Z1 direction).

In the second embodiment, as shown in FIG. 10, the laminated core 14b is configured so that the side 14g of the shaft insertion hole 14c is located at such a position that the side 14g overlaps the d-axis of the laminated core 14b in the circumferential direction as viewed in the axial direction. As used herein, the d-axis means the direction of magnetic flux produced by the magnetic poles in the rotor core 14 (laminated core 14b). In the example shown in FIG. 10, since the magnetic flux passes through the bridge portion 10b, the d-axis is the direction from the rotation axis C toward the bridge portion 10b as viewed in the axial direction.

Since the rotor core 14 (laminated core 14b) includes eight bridge portions 10b, eight d-axes are present corresponding to the bridge portions 10b. Each d-axis is formed at such a position that the d-axis overlaps the side 14g of the shaft insertion hole 14c in the circumferential direction. As shown in FIG. 9, vertices 14f of the shaft insertion hole 14c are located so as to overlap the positions, each located between circumferentially adjacent ones of the magnetic pole forming portions 10, in the circumferential direction.

### (Method for Manufacturing Rotor)

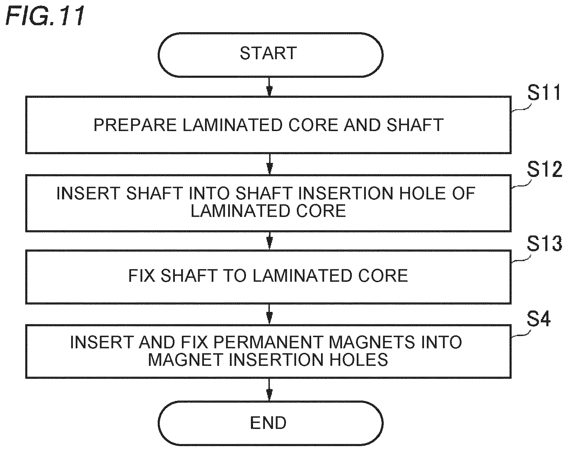

Next, a method for manufacturing the rotor 1 will be described with reference to FIG. 11.

First, as shown in FIG. 11, the step of preparing the laminated core 14b and the shaft 3 is performed in step S11.

The core forming step of forming the laminated core 14b such that the sides 14g of the shaft insertion hole 14c are located at such positions that the sides 14g overlap the d-axes of the laminated core 14b in the circumferential direction as viewed in the axial direction is performed in step S11. The core forming step performed in step S11 is an example of the "second core forming step" in the claims.

Next, the inserting step of inserting the shaft 3 into the shaft insertion hole 14c is performed in step S12. In the second embodiment, the inserting step is the step of inserting the shaft 3 into the shaft insertion hole 14c of the laminated core 14b in which the sides 14g of the shaft insertion hole 14c are located at such positions that the sides 14g overlap the d-axes of the laminated core 14b in the circumferential direction as viewed in the axial direction.

Then, as shown in FIG. 11, the fixing step of fixing the shaft 3 to the laminated core 14b is performed in step S13. Specifically, the fixing step is the step of fixing the shaft 3 to the laminated core 14b by performing, with the shaft 3 inserted in the shaft insertion hole 14c of the laminated core 14b, hydroforming to deform the outer peripheral surface 3e of the shaft 3 into a non-circular shape (regular hexadecagonal shape) in such a manner that the outer peripheral surface 3e of the shaft 3 conforms to an inner peripheral surface 14i of the shaft insertion hole 4c as viewed in the axial direction (see FIG. 1).

The other configurations of the second embodiment are similar to those of the first embodiment.

### [Effects of First and Second Embodiments]

The following effects can be obtained in the first and second embodiments.

### (Effects of Rotor)

In the first and second embodiments, as described above, the shaft (3) is fixed to the laminated core (4b, 14b) by hydroforming in which the liquid (800) filling an inside of the shaft (3) is expanded by being pressurized. The shaft insertion hole (4c, 14c) is located in the central portion of the laminated core (4b, 14b) and has a non-circular shape including the plurality of vertices (4f, 14f), as viewed in the axial direction of the laminated core (4b, 14b). The laminated core (4b, 14b) is configured in such a manner that the number of vertices (4f, 14f) and sides (4g, 14g) of the shaft insertion hole (4c, 14c) is an integral multiple of the number of poles or is the number of poles divided by a divisor of the number of poles other than the number of poles. Accordingly, when the number of vertices (4f, 14f) and sides (4g, 14g) of the shaft insertion hole (4c, 14c) is an integral multiple of the number of poles, the rotor (1, 11) can be easily formed in such a manner that the vertices (4f, 14f) (sides (4g, 14g)) are evenly arranged for each of the plurality of poles. When the number of vertices (4f, 14f) and sides (4g, 14g) is the number of poles divided by a divisor of the number of poles other than the number of poles, the rotor (1, 11) can be easily formed in such a manner that the vertices (4f, 14f) (sides (4g, 14g)) are evenly arranged for each of the pole groups per the divisor. As a result, displacement of the laminated core (4b, 14b) with respect to the shaft (3) in the rotational direction can be prevented in a more balanced manner for each of the plurality of poles or for each of the pole groups per the divisor. Unbalanced rotation of the rotor (1, 11) can thus be prevented while preventing displacement of the laminated core (4b, 14b) with respect to the shaft (3) in the rotational direction.

### (Effects of Method for Manufacturing Rotor)

In the first and second embodiments, as described above, the method for manufacturing the rotor (1, 11) includes the inserting step of inserting the shaft (3) into the shaft insertion hole (4c, 14c) in such a manner that the distance between the vertices (4f, 14f) of the shaft insertion hole (4c, 14c) having a non-circular shape including the plurality of vertices (4f, 14f) as viewed in the axial direction and the outer peripheral surface (3e) of the shaft (3) is equal to the first distance (L2) and the distance between the outer peripheral surface (3e) of the shaft (3) and the sides (4g, 14g) of the shaft insertion hole (4c, 14c) is equal to the second distance (L3) that is smaller than the first distance (L2). The method for manufacturing the rotor (1, 11) includes the fixing step of fixing the shaft (3) to the laminated core (4b, 14b) by performing, with the shaft (3) inserted in the shaft insertion hole (4c, 14c) of the laminated core (4b, 14b), hydroforming in which the liquid (800) filling the shaft (3) is expanded by being pressurized, and thus deforming the outer peripheral surface (3e) of the shaft (3) into a non-circular shape in such a manner that the outer peripheral surface (3e) of the shaft (3) conforms to the inner peripheral surface (4i, 14i) of the shaft insertion hole (4c, 14c) as viewed in the axial direction. Displacement of the laminated core (4b, 14b) with respect to the shaft (3) in the rotational direction is thus restricted at each of the plurality of vertices (4f, 14f). As a result, displacement of the laminated core (4b, 14b) with respect to the shaft (3) in the rotational direction can be prevented in a more balanced manner as compared to the case where the shaft insertion hole (4c, 14c) has only one vertex (4f, 14f). The method for manufacturing the rotor (1, 11) that can prevent unbalanced rotation of the rotor (1, 11) while preventing displacement of the laminated core (4b, 14b) with respect to the shaft (3) in the rotational direction can thus be provided.

In the first embodiment, as described above, the method for manufacturing the rotor (1) includes the first core forming step of forming the laminated core (4b) in such a manner that at least a part of the vertices (4f) of the shaft insertion hole (4c) is located at such a position that at least the part of the vertices (4f) overlaps the bridge portions (10b), each located between circumferentially adjacent ones of the magnet insertion holes (10a), in the circumferential direction as viewed in the axial direction. In the hydroforming, the shaft (3) expands in such a manner that the outer peripheral surface (3e) of the shaft (3) first comes into contact with the sides (4g) of the shaft insertion hole (4c) and then comes into contact with the vertices (4f) of the shaft insertion hole (4c). The stress applied to the vertices (4f) of the shaft insertion hole (4c) is therefore smaller than the stress applied to the sides (4g) of the shaft insertion hole (4c). The bridge portions (10b) have a relatively small width (W1) in the circumferential direction, and therefore have relatively low mechanical strength. Therefore, the stress applied to the bridge portions (10b) having relatively low mechanical strength can be reduced.

In the first embodiment, as described above, the laminated core (4b) includes the plurality of magnetic pole forming portions (10) that forms magnetic poles. The first core forming step is the step of forming the laminated core (4b) in such a manner that at least a part of the vertices (4f) of the shaft insertion hole (4c) is located at such a position that at least the part of the vertices (4f) overlaps the bridge portions (10b), each located between the pair of magnet insertion holes (10a) adjacent to each other in the circumferential direction in each of the plurality of magnetic pole forming portions (10) and each connecting the radially outer portion (4l) of the laminated core (4b) and the radially inner portion (4h) of the laminated core (4b), in the circumferential direction as viewed in the axial direction. Since the stress of the hydroforming applied to the vertices (4f) is therefore relatively small, the stress of the hydroforming applied to the bridge portions (10b) located in each of the plurality of magnetic pole forming portions (10) can be reduced.

In the second embodiment, as described above, the method for manufacturing the rotor further includes the second core forming step of forming the laminated core (14b) in such a manner that the sides (14g) of the shaft insertion hole (14c) are located at such positions that the sides (14g) overlap the d-axes of the laminated core (14b) in the circumferential direction as viewed in the axial direction. The sides (14g) of the shaft insertion hole (14c) are located radially inward of the vertices (14f) of the shaft insertion hole (14c) as viewed in the axial direction. Since the sides (14g) of the shaft insertion hole (14c) are thus located at relatively radially inner positions, the width of a magnetic path through which the magnetic flux flowing from a q-axis located on one side in the circumferential direction of the d-axis to a q-axis located on the other side in the circumferential direction of the d-axis passes can be increased accordingly. As a result, the flow of the magnetic flux can be facilitated, so that a decrease in motor output due to a decrease in magnetic flux can be prevented.

### [Modifications]

The embodiments disclosed herein are should be construed as illustrative, not restrictive, in all respects. The scope of the present invention is defined by the claims rather than by the above description of the embodiments, and includes all changes (modifications) that fall within the meaning and scope equivalent to the claims.

For example, the first and second embodiments illustrate an example in which the shaft insertion hole (4c, 14c) has a regular polygonal shape. However, the present invention is not limited to this. For example, the shaft insertion hole may have a polygonal shape that is not a regular polygon. The shaft insertion hole may have a shape that is not a polygon and that has a vertex.

The first and second embodiments illustrate an example in which the number of vertices (4f, 14f) and sides (4g, 14g) of the shaft insertion hole (4c, 14c) is an integral multiple of the number of poles. However, the present invention is not limited to this. The number of vertices and sides of the shaft insertion hole may be the number of poles divided by a divisor of the number of poles other than the number of poles (four vertices and four sides in the first and second embodiments).

The first and second embodiments illustrate an example in which the number of vertices (4f, 14f) and sides (4g, 14g) of the shaft insertion hole (4c, 14c) is twice the number of poles. However, the present invention is not limited to this. For example, the number of vertices and sides of the shaft insertion hole may be equal to the number of poles.

The first embodiment illustrates an example in which the vertices 4f of the shaft insertion hole 4c are located at such positions that the vertices 4f overlap all the bridge portions 10b in the circumferential direction. However, the present invention is not limited to this. The vertices 4f of the shaft insertion hole 4c may be located at such positions that the vertices 4f overlap a part of the eight bridge portions 10b in the circumferential direction.

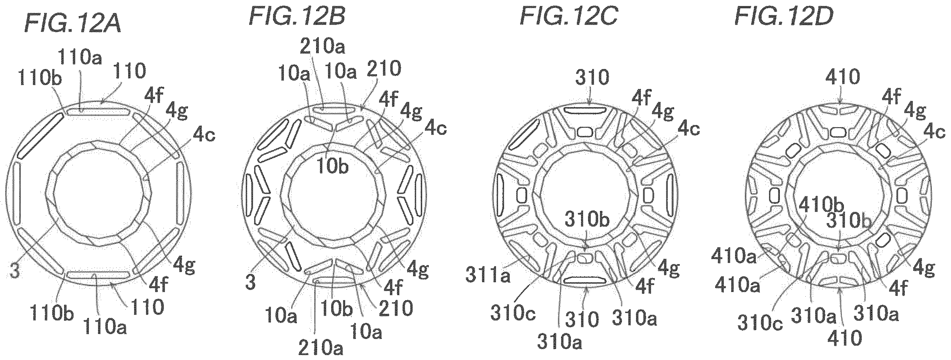

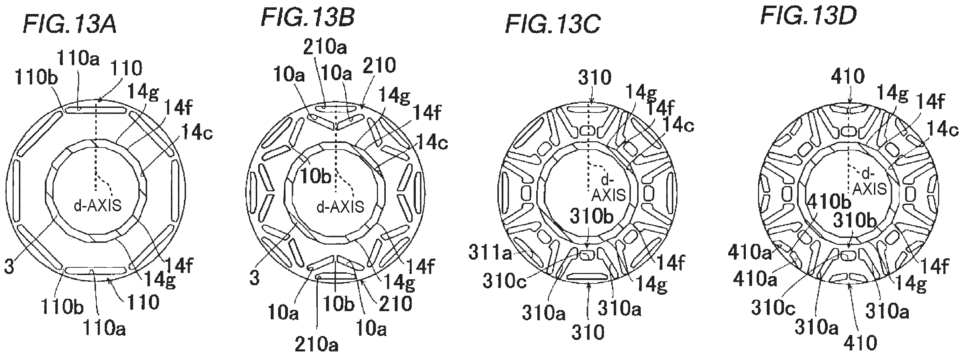

The first and second embodiments illustrate an example in which the magnetic pole forming portion 10 is composed of the pair of magnet insertion holes 10a adjacent to each other in the circumferential direction and the bridge portion 10b. However, the present invention is not limited to this. For example, as shown in FIGS. 12A and 13A, a magnetic pole forming portion 110 includes only one magnet insertion hole 110a extending in the circumferential direction. In this case, a bridge portion 110b is a portion located between the magnet insertion holes 110a adjacent to each other in the circumferential direction. As shown in FIG. 12A, the vertices 4f of the shaft insertion hole 4c are located at such positions that the vertices 4f overlap all the bridge portions 110b in the circumferential direction. As shown in FIG. 13A, the sides 14g of the shaft insertion hole 14c are located at such positions that the sides 14g overlap the d-axes (directions from the rotation axis C toward the middle in the circumferential direction of the magnet insertion hole 110a) in the circumferential direction.

As shown in FIGS. 12B and 13B, a magnetic pole forming portion 210 includes a pair of magnet insertion holes 10a, a bridge portion 10b located between the pair of magnet insertion holes 10a, and a magnet insertion hole 210a located radially outward of the pair of magnet insertion holes 10a and extending in the circumferential direction. As shown in FIG. 12B, the vertices 4f of the shaft insertion hole 4c are located at such positions that the vertices 4f overlap all the bridge portions 10b in the circumferential direction. As shown in FIG. 13B, the sides 14g of the shaft insertion hole 14c are located at such positions that the sides 14g overlap the d-axes (directions from the rotation axis C toward the bridge portion 10b and the middle in the circumferential direction of the magnet insertion hole 210a) in the circumferential direction.

As shown in FIGS. 12C and 13C, a magnetic pole forming portion 310 includes a pair of magnet insertion holes 310a adjacent to each other in the circumferential direction, and a magnet insertion hole 311a located radially outward of the pair of magnet insertion holes 310a and extending in the circumferential direction. A flux barrier 310c is provided in a bridge portion 310b between the magnet insertion holes 310a. As shown in FIG. 12C, the vertices 4f of the shaft insertion hole 4c are located at such positions that the vertices 4f overlap all the bridge portions 310b (flux barriers 310c) in the circumferential direction. As shown in FIG. 13C, the sides 14g of the shaft insertion hole 14c are located at such positions that the sides 14g overlap the d-axes (directions from the rotation axis C toward the bridge portion 310b and the middle in the circumferential direction of the magnet insertion hole 311a) in the circumferential direction.

As shown in FIGS. 12D and 13D, a magnetic pole forming portion 410 includes a pair of magnet insertion holes 310a, a bridge portion 10b, and a pair of magnet insertion holes 410a located radially outward of the pair of magnet insertion holes 310a so as to be adjacent to each other in the circumferential direction. Abridge portion 410b is provided between the pair of magnet insertion holes 410a. As shown in FIG. 12D, the vertices 4f of the shaft insertion hole 4c are located at such positions that the vertices 4f overlap all the bridge portions 310b (bridge portions 410b) in the circumferential direction. As shown in FIG. 13D, the sides 14g of the shaft insertion hole 14c are located at such positions that the sides 14g overlap the d-axes (directions from the rotation axis C toward the bridge portion 310b and the bridge portion 410b) in the circumferential direction.

The first and second embodiments illustrate an example in which the step of inserting the permanent magnets 5 into the magnet insertion holes 10a is performed after performing hydroforming. However, the present invention is not limited to this. Hydroforming may be performed after inserting the permanent magnets 5 into the magnet insertion holes 10a.

### Description of the Reference Numerals

- 1, 11: Rotor
- 3: Shaft
- 3e: Outer Peripheral Surface
- 4b, 14b: Laminated Core
- 4c, 14c: Shaft Insertion Hole
- 4f, 14f: Vertex
- 4g, 14g: Side
- 4h: Radially Inner Portion
- 4i, 14i: Inner Peripheral Surface
- 4l: Radially Outer Portion
- 5: Permanent Magnet
- 10, 310, 410: Magnetic Pole Forming Portion
- 10a, 110a, 210a, 310a, 311a, 410a: Magnet Insertion Hole
- 10b, 110b, 310b, 410b: Bridge Portion
- 800: Liquid
- L2: Distance (First Distance)
- L3: Distance (Second Distance)

## Claims

1. A method for manufacturing a rotor including a laminated core, the laminated core including a shaft insertion hole into which a cylindrical shaft is inserted and a magnet insertion hole into which a permanent magnet is inserted, the method comprising:
an inserting step of inserting the shaft into the shaft insertion hole in such a manner that a distance between a vertex of the shaft insertion hole that is located in a central portion of the laminated core and has a non-circular shape including a plurality of the vertices, as viewed in an axial direction of the laminated core, and an outer peripheral surface of the shaft is equal to a first distance and a distance between the outer peripheral surface of the shaft and a side of the shaft insertion hole is equal to a second distance that is smaller than the first distance; and
a fixing step of fixing the shaft to the laminated core by performing, with the shaft inserted in the shaft insertion hole of the laminated core, hydroforming in which a liquid filling an inside of the shaft is expanded by being pressurized, and thus deforming the outer peripheral surface of the shaft into a non-circular shape in such a manner that the outer peripheral surface of the shaft conforms to an inner peripheral surface of the shaft insertion hole as viewed in the axial direction.

2. The method for manufacturing a rotor according to claim 1, further comprising a first core forming step of forming the laminated core in such a manner that at least a part of the vertices of the shaft insertion hole is located at such a position that at least the part of the vertices overlaps, in a circumferential direction, a bridge portion located between circumferentially adjacent ones of the magnet insertion holes, as viewed in the axial direction.

3. The method for manufacturing a rotor according to claim 2, wherein
the laminated core includes a plurality of magnetic pole forming portions that forms magnetic poles, and
the first core forming step is the step of forming the laminated core in such a manner that at least a part of the vertices of the shaft insertion hole is located at such a position that at least the part of the vertices overlaps the bridge portions, each located between a pair of the magnet insertion holes adjacent to each other in the circumferential direction in each of the plurality of magnetic pole forming portions and each connecting a radially outer portion of the laminated core and a radially inner portion of the laminated core, in the circumferential direction as viewed in the axial direction.

4. The method for manufacturing a rotor according to claim 1, further comprising
a second core forming step of forming the laminated core in such a manner that the side of the shaft insertion hole is located at such a position that the side of the shaft insertion hole overlaps a d-axis of the laminated core in a circumferential direction as viewed in the axial direction.

5. A rotor comprising:
a cylindrical shaft;
a permanent magnet; and
a laminated core including a shaft insertion hole into which the shaft is inserted and a magnet insertion hole into which the permanent magnet is inserted, wherein
the shaft is fixed to the laminated core by hydroforming in which a liquid filling an inside of the shaft is expanded by being pressurized,
the shaft insertion hole is located in a central portion of the laminated core and has a non-circular shape including a plurality of vertices, as viewed in an axial direction of the laminated core, and
the laminated core is configured in such a manner that the number of vertices and sides of the shaft insertion hole is an integral multiple of the number of poles or is the number of poles divided by a divisor of the number of poles other than the number of poles.
